# EUROPEAN PATENT APPLICATION

(11) **EP 2 401 944 A1**
(43) Date of publication of application: **04.01.2012**
(21) Application number: 10838618.6
(22) Date of filing: 30.11.2010
(51) Int. Cl.: A47J 27/13, A47J 36/20

(54) **ENERGY-SAVING HEAT PRESERVATION COOKER**

(30) Priority: 15.11.2010 CN 201010543852
(71) Applicant: Xinhui Rixing Stainless Steel Products Company Limited, Jiangmen, Guangdong 529159 (CN)
(72) Inventor: LEI, Iou, Macao (CN)
(74) Representative: Ferreccio, Rinaldo
(86) International application number: PCT/CN2010/079273
(87) International publication number: WO 2011/076055

(57) **Abstract**

An energy-saving and heat-preservation cookware is disclosed. The cookware includes a cookware body, a cookware lid and a cookware seat. The cookware body comprises a heat-preservation body, and a heat-conductive bottom below the heat-preservation body. The heat-preservation body is of a double-layer vacuum structure. A heat-conductive metal block is provided inside the heat-conductive bottom. With this invention, it is simple in structure and convenient for use, the heat conduction of the cookware body is even and fast since a metal block is provided between the inner layer and the outer layer of the cookware bottom, and owing to the heat preservation of the double-layer structure, the heat dispersing is slow, and the heating time required is greatly reduced during cooking foods, thus it is energy-saving. [Fig. 2]

## Description

### FIELD OF THE INVENTION

The present invention relaters to a cookware, and in particular to an energy-saving and heat-preservation cookware with a double-layer vacuum structure.

### BACKGROUND OF THE INVENTION

These days, the cookware widely used has a cookware body made of a single layer of metal materials. The heat preservation property is low, and a lot of heat energy is lost because the metal material is a good heat conductor. In order for heat preservation, foods cooked have to be put in a heat preservation container, since the cookware is not energy-saving. There is no double-layer vacuum cookware developed.

### SUMMARY OF THE INVENTION

Having the above shortcomings, it is an object of the invention to provide an energy-saving and heat-preservation cookware which is of good heating property.

To achieve the above object, the technical solution of the invention is as follows:

An energy-saving and heat-preservation cookware comprises a cookware body, a cookware lid and a cookware seat. The cookware body comprises a heat-preservation body, and a heat-conductive bottom below the heat-preservation body. The heat-preservation body is of a double-layer vacuum structure. A heat-conductive metal block is provided inside the heat-conductive bottom.

Preferably, the heat-conductive bottom is of a double-layer structure, the heat-conductive metal block is enveloped between an inner layer and an outer layer of the heat-conductive bottom, and the heat-conductive bottom is welded below the heat-conductive body.

Preferably, the heat-conductive cookware body and the heat-conductive bottom are of an integrated vacuum structure. The heat-conductive metal block is arranged between the inner layer and the outer layer of the heat-conductive bottom.

Preferably, the metal block is an aluminum block.

Preferably, the cookware body, the cookware lid and the cookware seat are made of stainless steel.

Preferably, the cookware lid is of a double-layer vacuum structure.

Preferably, the cookware seat is of a double-layer vacuum structure.

Preferably, the cookware seat is provided with a recess adapted to receive the heat-conductive bottom.

Preferably, the cookware lid is provided with a sealing ring along the inside edge thereof.

The advantages of the present invention are as follows: (1) it is simple in structure, and convenient for use; (2) the heat conduction of the cookware body is improved while the energy is saved since a metal block is provided between the inner layer and the outer layer of the cookware bottom, and owing to the heat preservation, the heating time required is greatly reduced during cooking foods such as water and porridge. Experiments show that 10-20% of energy is saved in comparison with the known cookware in the art, and even more than 50% of energy is saved when cooking soup and porridge.

### BRIEF DESCRIPTION OF THE DRAWINGS

Fig. 1 is a perspective view of a heat preservation cookware of the invention;
Fig. 2 is an exploded sectional view of the heat preservation cookware of Fig. 1;
Fig. 3 is a sectional view of a heat preservation cookware according to another embodiment of the invention.

### DETAILED DESCRIPTION OF THE PREFERRED EMBODIMENTS

The invention will be further described in detail in the following embodiments accompanying the drawings. It will nevertheless be understood that no limitation of the scope of the invention is thereby intended.

### EMBODIMENT 1

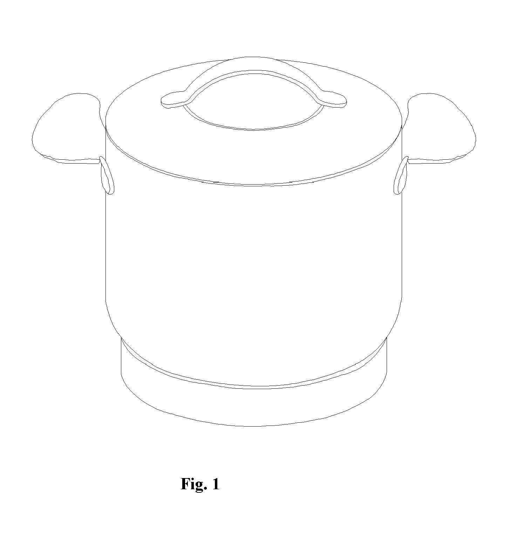

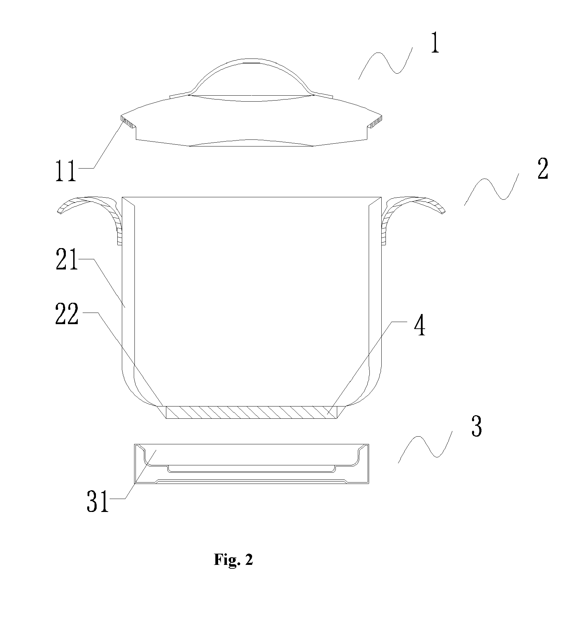

As shown in Figs. 1 and 2, the energy-saving and heat-preservation cookware includes a cookware lid 1, a cookware body 2 and a cookware seat 3. The cookware lid 1, the cookware body 2 and the cookware seat 3 are made of stainless steel. The cookware body 2 includes a heat-preservation body 21, and a heat-conductive bottom 22 joined to and below the heat-preservation body 21. The heat-preservation body 21 is of a double-layer vacuum structure. As an embodiment of this invention, the heat-conductive bottom 22 is of double-layer structure which comprises an outer layer and an inner layer with a metal block 4 enveloped between them. Preferably, the metal block is an aluminum block.

As shown in Fig. 2, the cookware lid 1 is provided with a sealing ring 11 along the inside edge of the lid.

The cookware seat 3 is of a double-layer vacuum structure. The cookware seat 3 is provided with a recess 31 adapted to receive the heat-conductive bottom 22.

### EMBODIMENT 2

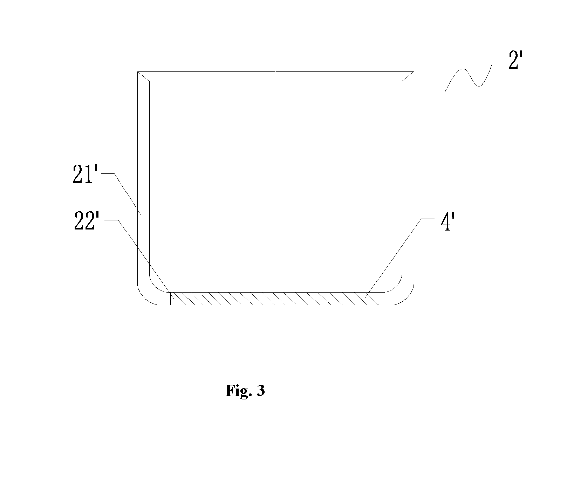

As another embodiment of the invention, as shown in Fig. 3, the heat-preservation body 21' and the heat-conductive bottom 22' are of an integrated vacuum structure. The aluminum block 4' is arranged between the inner layer and the outer layer of the heat-conductive bottom 22'. The other aspects of the Embodiment 2 are the same as that of the Embodiment 1.

It should be emphasized that the above-described embodiments can be combined freely. Many variations and modifications may be made to the above-described embodiment(s) of the invention without departing substantially from the spirit and principles of the invention. All such modifications and variations are intended to be included herein within the scope of this disclosure and the present invention and protected by the following claims.

## Claims

1. An energy-saving and heat-preservation cookware, comprising:
a cookware body;
a cookware lid; and
a cookware seat;
wherein the cookware body comprises a heat-preservation body, and a heat-conductive bottom below the heat-preservation body; the heat-preservation body is of a double-layer vacuum structure; a heat-conductive metal block is provided inside the heat-conductive bottom.

2. The energy-saving and heat-preservation cookware of claim 1, wherein the heat-conductive bottom is of a double-layer structure, the heat-conductive metal block is enveloped between an inner layer and an outer layer of the heat-conductive bottom, and the heat-conductive bottom is welded below the heat-conductive body.

3. The energy-saving and heat-preservation cookware of claim 1, wherein the heat-conductive cookware body and the heat-conductive bottom are of an integrated vacuum structure, the heat-conductive metal block is arranged between an inner layer and an outer layer of the heat-conductive bottom.

4. The energy-saving and heat-preservation cookware of claim 1, wherein the metal block is an aluminum block.

5. The energy-saving and heat-preservation cookware of claim 1, wherein the cookware body, the cookware lid and the cookware seat are made of stainless steel.

6. The energy-saving and heat-preservation cookware of claim 1, wherein the cookware lid is of a double-layer vacuum structure.

7. The energy-saving and heat-preservation cookware of claim 1, wherein the cookware seat is of a double-layer vacuum structure.

8. The energy-saving and heat-preservation cookware of claim 1, wherein the cookware seat is provided with a recess adapted to receive the heat-conductive bottom.

9. The energy-saving and heat-preservation cookware of claim 1, wherein the cookware lid is provided with a sealing ring along the inside edge of the lid.
